# EUROPÄISCHE PATENTANMELDUNG

(11) **EP 4 368 336 A1**
(43) Veröffentlichungstag der Anmeldung: **15.05.2024**
(21) Anmeldenummer: 23203875.2
(22) Anmeldetag: 16.10.2023
(51) Int. Cl.: B24B 7/14, B24B 33/055, B24B 37/08, F16C 29/00

(54) **VERFAHREN ZUM BEARBEITEN EINER FÜHRUNGSSCHIENE**

(30) Priorität: 25.10.2022 DE 202022106012 U
(71) Anmelder: Schneeberger AG Lineartechnik, 4914 Roggwil (CH)
(72) Erfinder: MEIER, Marc, 4938 Rohrbach (CH)
(74) Vertreter: EGLI-EUROPEAN PATENT ATTORNEYS

(57) **Zusammenfassung**

Ein Verfahren zum Bearbeiten einer Führungsschiene (100), die ein erstes Paar einander gegenüberliegender planparalleler der Seitenflächen (101, 103) aufweist, wobei die beiden Seitenflächen (101, 103) des ersten Paares gleichzeitig durch Flachhonen bearbeitet werden.

## Beschreibung

Die vorliegende Erfindung bezieht sich auf ein Verfahren zum Bearbeiten einer Führungsschiene.

Führungsschienen werden zur Bewegung eines Körpers auf einer vorgegebenen Bahn verwendet. Bei Linearführungen zum Führen einer Bewegung einer Komponente relativ zu einer anderen Komponente auf einer Geraden kommen vor allem Führungsschienen zum Einsatz. Um möglichst reibungsarme Bewegungen der beiden Führungsflächen zu ermöglichen, ist für Führungsschienen hohe Herstellgenauigkeit erforderlich, insbesondere eine hohe Ebenheit und eine geringe Oberflächenrauigkeit.

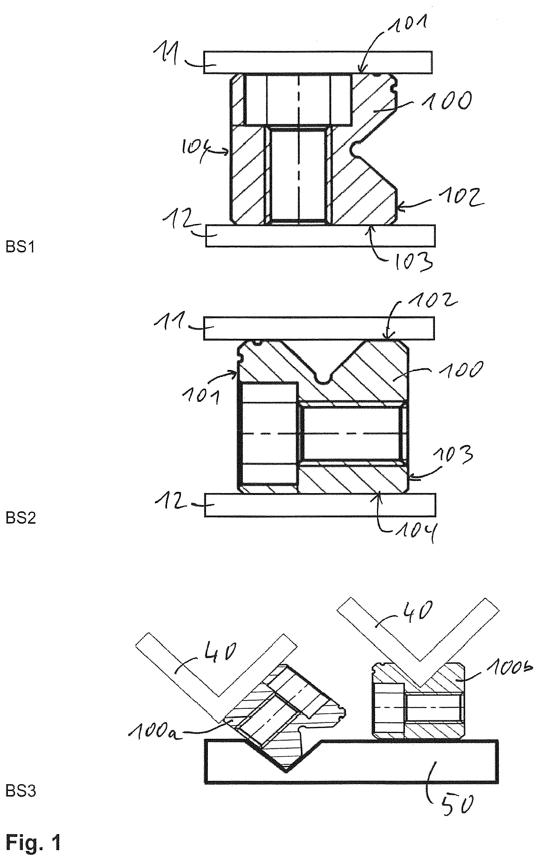

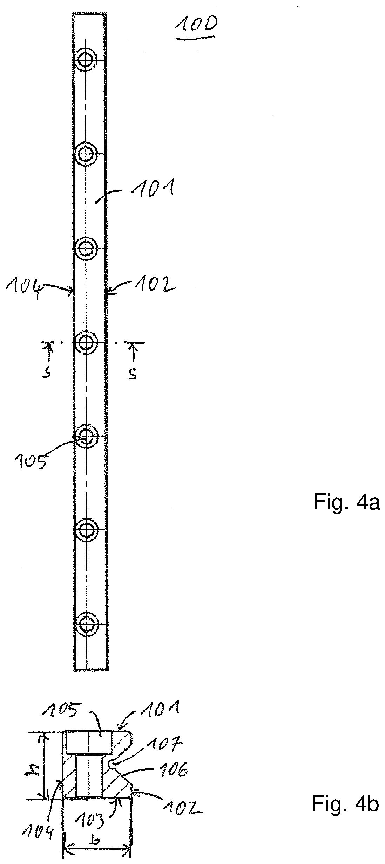

Ein Beispiel für eine solche Führungsschiene ist in Fig. 4 dargestellt. Dabei zeigt Fig. 4a) eine Draufsicht auf die Führungsschiene und Fig. 4b) eine Schnittansicht der Führungsschiene entlang einer in Fig. 1 dargestellten Linie S-S.

Die Führungsschiene 100 enthält vier Seitenflächen 101, 102, 103, 104, die jeweils paarweise planparallel zueinander angeordnet sind. Im Querschnitt ist das Profil der Führungsschiene 100 durch ein Rechteck mit abgerundeten oder abgefasten Ecken gebildet.

Zum Befestigen der Führungsschiene 100 auf einer (nicht gezeigten) Grundplatte ist zwischen den zwei Seitenflächen 101, 103 eine gestufte Durchgangsbohrung 105 gebildet, die zur Aufnahme einer (nicht gezeigten) Schraube dient, mit der die Führungsschiene auf der Grundplatte festgeschraubt werden kann.

Die Seitenfläche 102 ist mit einer V-förmigen Vertiefung 106 versehen, die in Längsrichtung der Führungsschiene 100 verläuft und vorzugsweise einen Prismenwinkel von 90° aufweist. Am Grund der Vertiefung 106 ist eine abgerundete Nut 107 gebildet.

Typische Beispiele einer solchen Führungsschiene haben eine Breite b und eine Höhe h im Bereich von etwa 5 bis 30 mm und eine Länge I bis etwa 500 mm.

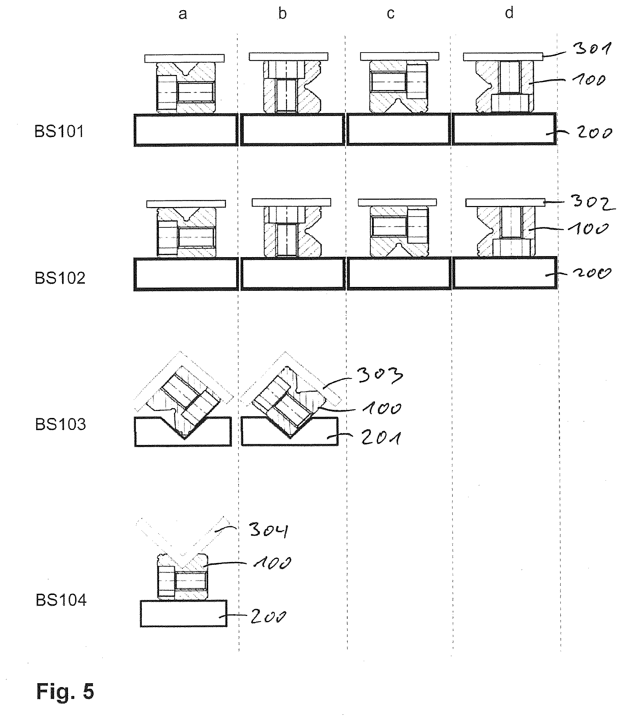

Fig. 5 ist eine schematische Darstellung der Bearbeitungsschritte eines Verfahrens zum Bearbeiten einer derartigen Führungsschiene, um die geforderte Ebenheit und Oberflächengüte zu erzielen. Nach der Herstellung einer Rohform der Führungsschiene 100 sind dazu folgende weitere Bearbeitungsschritte erforderlich.

Zur Oberflächenbearbeitung wird zunächst ein Schruppschleifen der Seitenflächen der Gleitführungsschiene 100 durchgeführt. Dabei wird die Führungsschiene 100 auf einer Unterlage 200 mit gerader Oberfläche befestigt, und die vier Seitenflächen 101, 102, 103, 104 werden in vier Bearbeitungsschritten BS101a, BS101b, BS101c, BS101d jeweils einzeln mit einem (schematisch dargestellten) Schleifwerkzeug 301 mit ebener Schleiffläche und grober Körnung grob abgeschliffen.

Anschliessend wird ein Flachschleifen der Seitenflächen der Führungsschiene 100 durchgeführt. Dabei wird die Führungsschiene 100 auf einer Unterlage 200 mit gerader Oberfläche befestigt, und die vier Seitenflächen 101, 102, 103, 104 werden in vier Bearbeitungsschritten BS102a, BS102b, BS102c, BS102d jeweils einzeln mit einem (schematisch dargestellten) Schleifwerkzeug 302 mit ebener Schleiffläche und feiner Körnung feingeschliffen.

Als nächstes wird in zwei Bearbeitungsschritten BS103a, BS103b ein Winkelschleifen der Seitenflächen der Gleitführungsschiene 100 durchgeführt. Dabei wird die Führungsschiene 100 auf einer Unterlage 201 mit V-förmiger Vertiefung befestigt und mit einem (schematisch dargestellten) Schleifwerkzeug 303 mit konkaver Schleiffläche, die einen V-förmigen Querschnitt hat, geschliffen.

Schliesslich wird in einem weiteren Bearbeitungsschritt BS104a ein Prismaschleifen der V-förmigen Vertiefung 105 durchgeführt. Dabei wird die Führungsschiene 100 auf einer Unterlage 200 mit gerader Oberfläche befestigt, und die V-förmige Vertiefung wird mit einem (schematisch dargestellten) Schleifwerkzeug 304 mit konvexer Schleiffläche, die einen V-förmigen Querschnitt hat, geschliffen.

Dieses Verfahren benötigt eine hohe Anzahl aufeinanderfolgender Bearbeitungsschritte. Zwischen den einzelnen Bearbeitungsschritten muss die Führungsschiene 100 aus ihrer Befestigung gelöst und in einer anderen Stellung wieder in die gleiche oder eine andere Befestigung eingespannt werden. Ferner kann auch ein Werkzeugwechsel erforderlich sein. Daher ist dieses Verfahren arbeitsaufwändig und somit zeitintensiv.

Die Aufgabe der vorliegenden Erfindung besteht darin, ein Verfahren zum Bearbeiten einer Führungsschiene, bereitzustellen, welches weniger zeitintensiv ist.

Die Aufgabe wird gelöst durch die Gegenstände der unabhängigen Ansprüche. Weiterbildungen der Erfindung sind jeweils in den Unteransprüchen angegeben. Dabei können die Gegenstände eines unabhängigen Anspruchs auch durch Merkmale der Unteransprüche eines anderen unabhängigen Anspruchs weitergebildet sein.

Das erfindungsgemässe Verfahren dient zum Bearbeiten einer Führungsschiene, die ein Paar einander gegenüberliegender planparalleler der Seitenflächen aufweist, wobei die beiden Seitenflächen des Paares gleichzeitig durch Flachhonen bearbeitet werden. Bei einer Führungsschiene, die ein zweites Paar einander gegenüberliegender planparalleler Seitenflächen aufweist, werden vorzugsweise auch die beiden Seitenflächen des zweiten Paares gleichzeitig durch Flachhonen bearbeitet.

Das Flachhonen ist ein zerspanendes Feinbearbeitungsverfahren für Oberflächen. Es kombiniert die Geschwindigkeit des Schleifens mit der Präzision des Läppens. Flachhonen stellt einen Spezialfall des Honens dar, bei dem das Honwerkzeug eine ebene Oberfläche hat. In der Produktion stellt es in der Regel den letzten Fertigungsprozess dar und dient dazu, hochwertige ebene Oberflächen zu erzielen.

Dadurch können beispielsweise gegenüber dem bekannten Verfahren die Anzahl der erforderlichen Bearbeitungsschritte und somit der Zeitaufwand für die Bearbeitung erheblich verringert und die Oberflächenqualität der Führungsschiene verbessert werden.

Vorzugsweise wird das Flachhonen der planparallelen Seitenflächen eines Paares gleichzeitig für zwei oder mehr Führungsschienen durchgeführt. Dadurch kann beispielsweise der Zeitaufwand für die Bearbeitung weiter verringert werden.

Vorzugsweise wird die Führungsschiene zum Flachhonen in eine Aussparung einer Läuferscheibe eingelegt, die die gesamte Dicke der Läuferscheibe durchdringt, und die Läuferscheibe wird zwischen zwei Honscheiben angeordnet. Dadurch kann beispielsweise die Führungsschiene während des Flachhonens seitlich gehalten werden.

Vorzugsweise werden die zwei Honscheiben während des Flachhonens in Kraftschluss mit den zu bearbeitenden Seitenflächen gebracht. Dadurch kann beispielsweise ein definiertes zweiseitiges Honen der Führungsschiene erzielt werden.

Vorzugsweise werden die zwei Honscheiben während des Flachhonens in eine Drehbewegung versetzt. Dadurch kann beispielsweise eine Relativbewegung zwischen den zwei Honscheiben und der Führungsschiene erzielt werden.

Vorzugsweise wird die Läuferscheibe während des Flachhonens in eine Planetenkinematik versetzt. Dadurch kann beispielsweise anstelle feststehender Schleifspuren ein Kreuzschliff zur verbesserten Aufnahme und Verteilung von Schmieröl erzielt werden.

Vorzugsweise wird in einem einzigen Bearbeitungsschritt sowohl ein Winkelschleifen einer ersten Führungsschiene als auch ein Prismaschleifen einer zweiten Führungsschiene durchgeführt. Dadurch kann beispielsweise der Zeitaufwand weiter verringert werden.

Vorzugsweise wird zum Winkelschleifen und zum Prismaschleifen ein Schleifwerkzeug verwendet, das eine konvexe Schleiffläche mit einem V-förmigen Querschnitt aufweist. Dadurch kann beispielsweise die Anzahl erforderlicher Werkzeuge verringert werden.

Die erfindungsgemässe Führungsschiene wird unter Verwendung des erfindungsgemässen Verfahrens hergestellt. Eine solche Führungsschiene kann beispielsweise gegenüber einer nach dem bekannten Verfahren hergestellten Führungsschiene eine verbesserte Oberflächenqualität aufweisen und mit verringertem Zeitaufwand hergestellt werden.

Die erfindungsgemässe Läuferscheibe dient zum Aus- oder Nachrüsten einer Flachhonmaschine für das gleichzeitige Flachhonen zweier planparalleler Seitenflächen einer Führungsschiene. Sie weist eine zum Aufnehmen der Führungsschiene bestimmte Aussparung auf, die die gesamte Dicke der Läuferscheibe durchdringt und in der Form an eine Draufsicht der Führungsschiene angepasst ist. Durch eine solche Läuferscheibe kann beispielsweise eine Flachhonmaschine so aus- oder nachgerüstet werden, dass sie für das Durchführen des erfindungsgemässen Verfahrens geeignet ist.

Vorzugsweise ist eine Dicke der Läuferscheibe geringer als eine Höhe (h) oder eine Breite (b) der Führungsschiene. Dadurch kann beispielsweise verhindert werden, dass von der Läuferscheibe selber Material abgetragen wird.

Vorzugsweise ist eine Breite der Aussparung gleich einer Breite (b) oder einer Höhe (h) der Führungsschiene. Dadurch kann beispielsweise erreicht werden, dass die Führungsschiene während des Flachhonens in der Richtung ihrer Breite bzw. bei um 90 ° gedrehter Lage in der Richtung ihrer Höhe gehalten wird.

Vorzugsweise weist die Läuferscheibe zusätzlich eine oder mehrere nicht zum Aufnehmen einer Führungsschiene bestimmte Aussparung(en) auf. Dadurch kann beispielsweise das Gewicht der Läuferscheibe verringert werden.

Vorzugsweise ist eine Länge der Aussparung gleich einer Länge (I) der Führungsschiene und/oder ist eine Länge der Aussparung grösser als eine Länge (I) der Führungsschiene und ein Ausgleichsstück zum Fixieren der Führungsschiene in der Längsrichtung in der Aussparung ist bereitgestellt. Dadurch kann beispielsweise erreicht werden, dass die Führungsschiene während des Flachhonens in der Richtung ihrer Länge gehalten wird.

Die erfindungsgemässe Flachhonmaschine dient zum gleichzeitigen Bearbeiten von zwei einander gegenüberliegenden planparallelen Seitenflächen einer Führungsschiene, insbesondere auch einer Gleitführungsschiene. Die Flachhonmaschine enthält eine erste Honscheibe, die drehbar in der Flachhonmaschine angeordnet ist, eine zweite Honscheibe, die der ersten Honscheibe gegenüberliegend drehbar in der Flachhonmaschine angeordnet ist, einen inneren Stiftkranz, der drehbar in der Flachhonmaschine angeordnet ist, einen äusseren Stiftkranz, der feststehend in der Flachhonmaschine angeordnet ist, und eine erfindungsgemässe Läuferscheibe, die zwischen dem inneren Stiftkranz und dem äusseren Stiftkranz angeordnet ist.

Vorzugsweise weist die Läuferscheibe eine Zahnung auf, die in den inneren Stiftkranz und den äusseren Stiftkranz eingreift. Dadurch kann beispielsweise die Läuferscheibe zur Erzielung des Kreuzschliffs in eine Planetenkinematik versetzt werden.

Die erfindungsgemässe Verwendung einer Flachhonmaschine umfasst das gleichzeitige Bearbeiten von zwei einander gegenüberliegenden planparallelen Seitenflächen einer Führungsschiene. Dadurch können beispielsweise gegenüber dem Verfahren ohne Verwendung einer Flachhonmaschine die Anzahl der erforderlichen Bearbeitungsschritte und somit der Zeitaufwand für die Bearbeitung erheblich verringert und die Oberflächenqualität der Führungsschiene verbessert werden.

Weitere Merkmale und Zweckmässigkeiten der Erfindung ergeben sich aus der Beschreibung eines Ausführungsbeispiels anhand der beigefügten Zeichnungen.
- Fig. 1: ist eine schematische Darstellung der Bearbeitungsschritte eines Verfahrens zum Bearbeiten einer Führungsschiene gemäss einer Ausführungsform der vorliegenden Erfindung.
- Fig. 2: ist eine schematische Teilansicht einer Flachhonmaschine, die zum Durchführen der vorliegenden Erfindung eingerichtet ist.
- Fig. 3: ist eine Ansicht einer in der in Fig. 2 gezeigten Flachhonmaschine enthaltenen Läuferscheibe.
- Fig. 4a: ist eine Draufsicht auf eine Führungsschiene, bei deren Herstellung die vorliegende Erfindung angewendet werden kann.
- Fig. 4b: ist eine Schnittansicht der Führungsschiene entlang einer in Fig. 4a durch S-S gekennzeichneten Linie.
- Fig. 5: ist eine schematische Darstellung der Bearbeitungsschritte eines bekannten Verfahrens zum Bearbeiten einer Führungsschiene.

Mit Bezug auf die beigefügten Figuren wird eine Ausführungsform der vorliegenden Erfindung beschrieben.

Fig. 1 ist eine schematische Darstellung der Bearbeitungsschritte eines Verfahrens zum Bearbeiten einer Führungsschiene gemäss der vorliegenden Ausführungsform.

Nach der Herstellung der Rohform der Führungsschiene 100 werden zunächst in einem ersten Bearbeitungsschritt BS1 die planparallelen Seitenflächen 101, 103 gleichzeitig durch zweiseitiges Flachhonen zwischen zwei Honscheiben 11, 12 geschliffen. Anschliessend werden in einem zweiten Bearbeitungsschritt BS2 die beiden anderen planparallelen Seitenflächen 102, 104 gleichzeitig durch zweiseitiges Flachhonen zwischen den zwei Honscheiben 11, 12 geschliffen. Dabei können jeweils auch mehrere Führungsschienen 100 gleichzeitig bearbeitet werden.

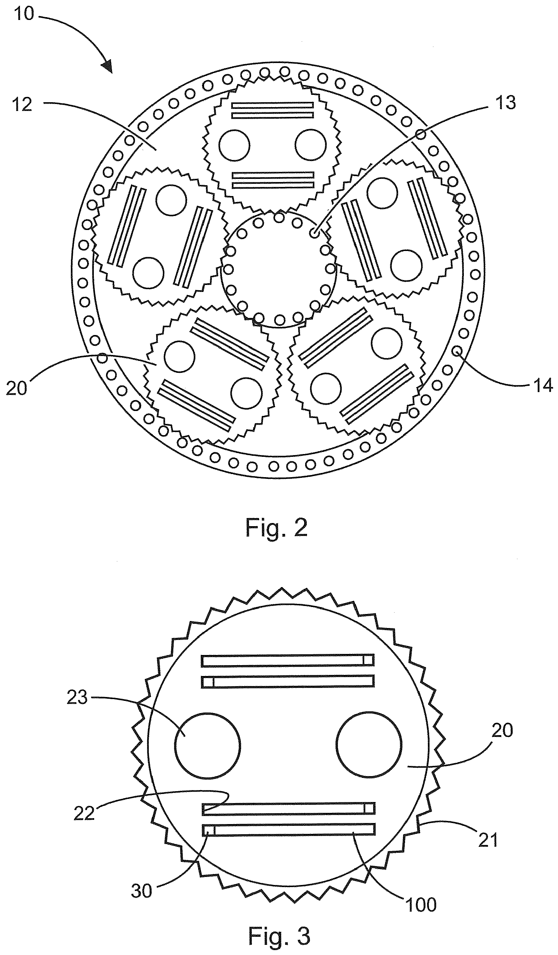

Fig. 2 ist eine schematische Teilansicht einer Flachhonmaschine 10, die zum Durchführen der Bearbeitungsschritte BS1 und BS2 eingerichtet ist. Die (in der Figur nicht gezeigte) obere Honscheibe 11 und die untere Honscheibe 12 sind ringförmig ausgebildet und drehbar in der Flachhonmaschine 10 angeordnet.

Ein innerer Stiftkranz 13 ist innerhalb des Innendurchmessers der unteren Honscheibe 12 drehbar in der Flachhonmaschine 10 angeordnet. Ein äusserer Stiftkranz 14 ist ausserhalb des Aussendurchmessers der unteren Honscheibe 12 feststehend in der Flachhonmaschine 10 angeordnet. Gezahnte Läuferscheiben 20 sind zwischen dem inneren und äusseren Stiftkranz 13, 14 angeordnet und greifen mit ihren Zähnen in diese ein.

Fig. 3 ist eine vergrösserte Draufsicht auf eine solche Läuferscheibe 20. Eine Dicke der Läuferscheibe 20 ist vorzugsweise geringer als die Höhe h der zu bearbeitenden Gleitführungsschiene 100 gewählt. Eine grössere Dicke würde verhindern, dass die Honscheiben 11, 12 in Kraftschluss mit der Gleitführungsschiene 100 gebracht werden können. Bei gleicher Dicke würde auch eine Materialabtragung von der Läuferscheibe 20 erfolgen.

Die Läuferscheibe 20 ist mit einer Zahnung 21 versehen. Stiftdurchmesser und -abstände des inneren und äusseren Stiftkranzes 13, 14 der Flachhonmaschine 10 und Zahngrösse und Zahnabstand der Zahnung 21 der Läuferscheibe 20 sind aufeinander abgestimmt.

Neben der Zahnung 21 weist die Läuferscheibe 20 rechteckige Aussparungen 22 auf, die sich durch die gesamte Dicke der Läuferscheibe 20 erstrecken und deren Breite der Breite b der zu bearbeitenden Führungsschienen 100 entspricht. Die Länge dieser Aussparungen ist grösser oder gleich der maximalen Länge I der zu bearbeitenden Führungsschienen 100 gewählt.

Zur Gewichtsreduktion kann die Läuferscheibe 20 weitere Aussparungen aufweisen, beispielsweise die in Fig. 3 gezeigten runden Aussparungen 23.

Zum Durchführen der Bearbeitung werden die Läuferscheiben 20 so zwischen den inneren und äusseren Stiftkranz 13, 14 auf die untere Honscheibe 12 aufgelegt, dass ihre Zahnung in die Stifte des inneren und äusseren Stiftkranzes 13, 14 eingreift.

Die zu bearbeitenden Gleitführungsschienen 100 werden in die Aussparungen 22 der Läuferscheiben 20 eingelegt. Durch Ausgleichsstücke 30, deren Dicke kleiner gleich der Höhe h der zu bearbeitenden Führungsschienen 100 ist und deren Länge der Differenz zwischen der Länge der jeweiligen Aussparung 22 und der Länge I der jeweiligen Führungsschiene 100 entspricht, werden die Führungsschienen 100 in der Längsrichtung in den Aussparungen 22 fixiert.

Anschliessend wird die Flachhonmaschine 10 geschlossen. Dabei wird die obere Honscheibe 11 so weit nach unten gedrückt, bis sie mit den Gleitführungsschienen 100 in Kontakt ist.

Im Betrieb werden die untere und die obere Honscheibe 11, 12 gedreht. Auch der innere Stiftkranz 13 wird gedreht. Dadurch werden die Läuferscheiben 20 in eine Bewegung wie bei einem Planetengetriebe versetzt. Bei dieser Planetenkinematik drehen sich die Läuferscheiben um ihre eigene Achse, während diese Drehachse sich ihrerseits auf einer Kreisbahn bewegt.

Während der Bearbeitung werden die untere und die obere Honscheibe 11, 12 in Kraftschluss mit den Führungsschienen 100 gehalten. Durch diesen Kraftschluss und die Relativbewegung zwischen der den Führungsschienen 100 und den Honscheiben 11, 12 erfolgt die gleichzeitige zerspanende Bearbeitung der einander gegenüberliegenden planparallelen Seitenflächen 101 und 103 durch Honen.

Wenn die Läuferscheiben 20 eine geringere Dicke als die Höhe h der Führungsschienen 100 haben, stehen sie nicht in Kraftschluss mit den Honscheiben 11, 12. Daher wird von ihnen in diesem Fall kein Material abgetragen.

Das Flachhonen vereinigt die Eigenschaften des in dem bekannten Verfahren verwendeten Schrupp- und Flachschleifens. Bei ihm können in einem einzigen Bearbeitungsschritt sowohl grosse Mengen an Material abgetragen als auch feinste Rauheiten und Ebenheiten erzielt werden.

Es ist daher nicht mehr erforderlich, zunächst ein Schruppschleifen und anschliessend ein Flachschleifen durchzuführen. Ferner werden beim Flachhonen zwei der Seitenflächen gleichzeitig bearbeitet. Daher kann die Anzahl der Bearbeitungsschritte von den für das Schrupp- und Flachschleifen nach dem bekannten Verfahren erforderlichen acht Bearbeitungsschritten BS101a, BS101b, BS101c, BS101d, BS102a, BS102b, BS102c, BS102d auf nur zwei Bearbeitungsschritte BS1, BS2 verringert werden.

Somit kann mit dem Verfahren gemäss der vorliegenden Ausführungsform der Zeitaufwand bei der Herstellung der Führungsschiene 100 gegenüber dem bekannten Verfahren erheblich verringert werden.

Dadurch, dass sowohl die zu bearbeitenden Führungsschienen 100 als auch die als Bearbeitungswerkzeuge dienenden Honscheiben 11, 12 während des Flachhonens in Bewegung sind, ergibt sich anstatt feststehender Schleifspuren ein Kreuzschliff. Dieser ermöglicht eine bessere Aufnahme und Verteilung von Schmieröl und verbessert dadurch die Gleiteigenschaften der Führungsschienen 100.

Somit kann mit dem Verfahren gemäss der vorliegenden Ausführungsform die Oberflächenqualität der Führungsschiene 100 gegenüber dem bekannten Verfahren verbessert werden.

Der zweite Bearbeitungsschritt BS2 erfolgt ebenso wie der erste Bearbeitungsschritt BS1. Er unterscheidet sich von diesem nur dadurch, dass die Gleitführungsschiene 100 um ihre Längsachse um 90° gedreht in der Flachhonmaschine 10 angeordnet ist und daher bei der obigen Beschreibung Höhe h und Breite b vertauscht sind.

Im Folgenden wird ein Beispiel angegeben, wie eine Führungsschiene durch zweiseitiges Flachhonen bearbeitet wurde. Dazu wurde eine 2-Scheiben-Flachhonmaschine der Firma Stähli vom Typ DLM 805 verwendet.

Die Ursprungsgeradheit der Führung lag zwischen 0.01 und 0.3mm.

Die Honscheiben hatten eine Korngrösse zwischen 0,03 und 0,2 mm und eine mittlere Schnittigkeit. Die Abtragsfähigkeit lag zwischen 0,0002 und 0,013 mm/s

Die Läuferscheiben waren so ausgelegt, dass die Führung der Teile mittig erfolgte. Die Scheibenbelastung lag zwischen 1 und 40%. Die Läuferscheiben hatten gefräste Ölkanäle für eine optimale Schmierung und Taschentoleranzen zwischen 0.01 und 1 mm je nach Werkstück

Die Spülung war für 10 bis 180 I/min ausgelegt, als Honöl wurde Blasogrind HC 5 verwendet.

Der Schneiddruck lag zwischen 30 und 1500 dKN, die Drehzahlen zwischen 5 und 150 U/min. Als Drehrichtungen wurden Gegenlauf und Mitlauf verwendet.

Als Ergebnis nach dem Flachhonen werden eine Winkligkeit der Führungen von 0.01 bis 0.3mm und eine Ebenheit zwischen 0.001 und 0,1mm erreicht.

Zusätzlich zu den Bearbeitungsschritten BS1 und BS2 kann das Verfahren weiter den in Fig. 1 gezeigten Bearbeitungsschritten BS3 umfassen.

Im Gegensatz zu dem bekannten Verfahren, bei dem die Seitenflächen einzeln geschliffen werden, ist durch das Flachhonen bereits eine Planparallelität der einander gegenüberliegenden Seitenflächen gegeben. Daher ist für das Winkelschleifen nur noch ein einziger Bearbeitungsschritt erforderlich. Ferner wird dafür kein Schleifwerkzeug mit konkaver Schleiffläche benötigt. Wie in Fig. 1 dargestellt, wird stattdessen ein Schleifwerkzeug 40 verwendet, das eine mit konvexe Schleiffläche mit einem V-förmigen Querschnitt aufweist.

Das ermöglicht es, in demselben Bearbeitungsschritt BS3 ausser dem Winkelschleifen auch ein Prismaschleifen durchzuführen. Dazu werden auf einer Unterlage 50 mit gerader Oberfläche, die zusätzlich eine V-förmige Vertiefung aufweist, eine erste Führungsschiene 100a in der V-förmigen Vertiefung und eine zweite Führungsschiene 100b auf der geraden Oberfläche befestigt. Mit dem Schleifwerkzeug 40 wird dann sowohl das Winkelschleifen der ersten Führungsschiene 100a als auch das Prismaschleifen der zweiten Führungsschiene 100b durchgeführt.

Dadurch kann die Anzahl der Bearbeitungsschritte und damit der Zeitaufwand bei der Bearbeitung der Führungsschiene 100 gegenüber dem bekannten Verfahren weiter verringert werden.

## Patentansprüche

1. Verfahren zum Bearbeiten einer Führungsschiene (100), die ein erstes Paar einander gegenüberliegender planparalleler Seitenflächen (101, 103) aufweist,
wobei die beiden Seitenflächen (101, 103) des ersten Paares gleichzeitig durch Flachhonen bearbeitet werden.

2. Verfahren gemäss Anspruch 1, wobei
die Führungsschiene (100) ein zweites Paar einander gegenüberliegender planparalleler Seitenflächen (102, 104) aufweist,
wobei die beiden Seitenflächen (102, 104) des zweiten Paares gleichzeitig durch Flachhonen bearbeitet werden.

3. Verfahren gemäss Anspruch 1 oder 2, wobei
das Flachhonen der planparallelen Seitenflächen (101, 103; 102, 104) eines Paares gleichzeitig für zwei oder mehr Führungsschienen (100) durchgeführt wird.

4. Verfahren gemäss einem der Ansprüche 1 bis 3, wobei
die Führungsschiene (100) zum Flachhonen in eine Aussparung (22) einer Läuferscheibe (20) eingelegt wird, die die gesamte Dicke der Läuferscheibe (20) durchdringt, und
die Läuferscheibe (20) zwischen zwei Honscheiben (11, 12) angeordnet wird.

5. Verfahren gemäss Anspruch 4, wobei
die zwei Honscheiben (11, 12) während des Flachhonens in Kraftschluss mit den zu bearbeitenden Seitenflächen (101, 103; 102, 104) gebracht werden.

6. Verfahren gemäss Anspruch 4 oder 5, wobei
die zwei Honscheiben (11, 12) während des Flachhonens in eine Drehbewegung versetzt werden.

7. Verfahren gemäss einem der Ansprüche 4 bis 6, wobei
die Läuferscheibe (20) während des Flachhonens in eine Planetenkinematik versetzt wird.

8. Verfahren gemäss einem der Ansprüche 1 bis 7, wobei
in einem einzigen Bearbeitungsschritt (BS3) sowohl ein Winkelschleifen einer ersten Führungsschiene (100a) als auch ein Prismaschleifen einer zweiten Führungsschiene (100b) durchgeführt wird.

9. Verfahren gemäss Anspruch 8, wobei
zum Winkelschleifen und zum Prismaschleifen ein Schleifwerkzeug (40) verwendet wird, das eine konvexe Schleiffläche mit einem V-förmigen Querschnitt aufweist.

10. Führungsschiene (100), die unter Verwendung eines Verfahrens gemäss einem der Ansprüche 1 bis 9 hergestellt wurde.

11. Läuferscheibe (20) zum Aus- oder Nachrüsten einer Flachhonmaschine (10) für das gleichzeitige Flachhonen zweier planparalleler Seitenflächen (101, 103) einer Führungsschiene, insbesondere einer Gleitführungsschiene, wobei
die Läuferscheibe (20) eine zum Aufnehmen der Führungsschiene (100) bestimmte Aussparung (22) aufweist, die die gesamte Dicke der Läuferscheibe (20) durchdringt und in der Form an eine Draufsicht der Führungsschiene (100) angepasst ist.

12. Läuferscheibe (20) gemäss Anspruch 11, wobei
eine Dicke der Läuferscheibe (20) geringer als eine Höhe (h) oder eine Breite (b) der Führungsschiene (100) ist und/oder
eine Breite der Aussparung (22) gleich einer Breite (b) oder einer Höhe (h) der Führungsschiene (100) ist und/oder
die Läuferscheibe (20) zusätzlich eine oder mehrere nicht zum Aufnehmen einer Führungsschiene (100) bestimmte Aussparung(en) (23) aufweist.

13. Läuferscheibe (20) gemäss Anspruch 11 oder 12, wobei
eine Länge der Aussparung (22) gleich einer Länge (I) der Führungsschiene (100) ist und/oder
eine Länge der Aussparung (22) grösser als eine Länge (I) der Führungsschiene (100) ist und ein Ausgleichsstück (30) zum Fixieren der Führungsschiene (100) in der Längsrichtung in der Aussparung (22) bereitgestellt ist.

14. Flachhonmaschine (10) zum gleichzeitigen Bearbeiten von zwei einander gegenüberliegenden planparallelen Seitenflächen (101, 103; 102, 104) einer Führungsschiene, insbesondere einer Gleitführungsschiene (100) mit
einer ersten Honscheibe (11), die drehbar in der Flachhonmaschine (10) angeordnet ist,
einer zweiten Honscheibe (12), die der ersten Honscheibe (11) gegenüberliegend drehbar in der Flachhonmaschine (10) angeordnet ist,
einem inneren Stiftkranz (13), der drehbar in der Flachhonmaschine (10) angeordnet ist,
einem äusseren Stiftkranz (14), der feststehend in der Flachhonmaschine (10) angeordnet ist, und
einer Läuferscheibe (20) gemäss einem der Ansprüche 11 bis 13, die zwischen dem inneren Stiftkranz (13) und dem äusseren Stiftkranz (14) angeordnet ist,
wobei die Läuferscheibe (20) vorzugsweise eine Zahnung (21) aufweist, die in den inneren Stiftkranz (13) und den äusseren Stiftkranz (14) eingreift.

15. Verwendung einer Flachhonmaschine (10), insbesondere einer Flachhonmaschine (10) gemäss Anspruch 14 zum gleichzeitigen Bearbeiten von zwei einander gegenüberliegenden planparallelen Seitenflächen (101, 103; 102, 104) einer Führungsschiene, insbesondere einer Gleitführungsschiene (100).
